# EUROPEAN PATENT SPECIFICATION

(11) **EP 2 949 535 B1**
(45) Date of publication and mention of the grant of the patent: **31.08.2016**
(21) Application number: 15168504.7
(22) Date of filing: 20.05.2015
(51) Int. Cl.: B60W 50/08, B60W 30/18, B60W 50/14

(54) **VEHICLE WITH LAUNCH CONTROL**
FAHRZEUG MIT RENNSTART-ANFAHRVORGANG
VÉHICULE AVEC CONTRÔLE DE LANCEMENT

(30) Priority: 30.05.2014 JP 2014112941
(43) Date of publication of application: 02.12.2015
(73) Proprietor: Yamaha Hatsudoki Kabushiki Kaisha, Shizuoka-ken Shizuoka 438-8501 (JP)
(72) Inventor: YAGI, Toshiki, Shizuoka-ken, Shizuoka 438-8501 (JP); WATANABE, Takashi, Shizuoka-ken, Shizuoka 438-8501 (JP)
(74) Representative: Moreland, David

(56) References cited:
- WO-A1-2014/048947
- DE-A1- 10 305 297
- "Owner's manual Kawasaki KX 450F", , 28 February 2013 (2013-02-28), XP055214215, Retrieved from the Internet: URL:http://www.kawasaki-techinfo.net/show_ pdf.php?manual=OM&pdf_name=99976-1807_EN_2 .pdf [retrieved on 2015-09-17]
- "aprilia 899128 RSV4 Factory -R MY2011 JA-EN Manual", , 31 October 2010 (2010-10-31), XP055214158, Retrieved from the Internet: URL:http://www.shuomingshuku.com/download/ 2674771/B6550DB424783F9E393A9186FFE1D1DB/a prilia 899128 RSV4 Factory - R MY2011 JA-EN 说明书.pdf [retrieved on 2015-09-17]

## Description

### FIELD OF INVENTION

The present invention relates to a vehicle, such as a straddle-type vehicle or saddle-ride type vehicle.

### BACKGROUND TO INVENTION

In a race in which a vehicle is started from a stopped state, it is required that the vehicle at a time of starting accelerates rapidly. When an amount of operation of an accelerator is increased in order to achieve a high accelerating force, a drive wheel sometimes slips. Therefore, launch control that appropriately accelerates the vehicle while inhibiting slip of the drive wheel is sometimes used in which an accelerator operation is assisted at the time of starting. For example, the launch control is performed at the time of starting of the vehicle, until a termination condition has been met, e.g. gear ratio of a drive system is changed or a speed of the vehicle exceeds a threshold value, whereby the launch control is terminated.

As described in "Aprilia 899128 RSV4 Factory-R MY2011 JA-EN Manual", Aprilia, October 2010, p.48, 67-70, a motorcycle including a launch control system has been developed. In this motorcycle, when the launch control system is activated, the launch control is performed every time the motorcycle is stopped and started, regardless of whether or not it is at a time of a start of the race.

Rapid acceleration from the stop state may not always be necessary except for the time of the start of the race. Therefore, when the launch control is not necessary, the rider may need to perform a deactivating operation of the launch control system.

In the motorcycle described in "Aprilia 899128 RSV4 Factory-R MY2011 JA-EN Manual", Aprilia, October 2010, p.48, 67-70, a plurality of steps are required for an activating operation and the deactivating operation of the above-mentioned launch control system. Therefore, a time period required for each of the activating operation and the deactivating operation is long. Therefore, a motorcycle in which the launch control can be easily set to an activation state in a short period of time by the rider at a time of stopping of the vehicle may be desired. In this case, the rider may set the launch control to the activation state by easily performing a setting operation in a short period of time.

On the other hand, the rider may be in an extremely stressed state right before the start of the race. Therefore, the launch control may not be performed unless an operation used when the launch control is set to the activation state is accurately performed.

Another motorcycle having a launch control mode is described in "Owner's Manual Kawasaki KX 450F", 28 February 2013 (2013-02-28), page 27. This describes the launch control mode as being used to adjust ignition timing to help riders get better starts on slippery terrain. The launch control mode can be set when the engine is running and in neutral, 1^{st} or 2^{nd} gear. When activated, it only functions in 1^{st} and 2^{nd} gear. A launch control mode button is pushed for over two seconds, whereupon an orange launch control mode indicator light will blink to indicate the system is operating. When shifting into 3^{rd} gear, the system is automatically deactivated.

At least one object of the present invention is to provide a vehicle in which launch control can be easily and accurately set to an activation state in a short period of time.

It is an object of the present invention to obviate or mitigate one or more problems or disadvantages in the prior art.

### SUMMARY OF INVENTION

The objects above are achieved by a vehicle comprising the features of claim 1. Some preferred features are defined in the dependent claims.

According to a first aspect of the present invention is a vehicle, such as but not limited to a straddle-type or saddle-ride vehicle, in which launch control can be performed when starting the vehicle. The vehicle comprises a first operation member configured to be operated or depressed by a rider. The vehicle comprises a controller that may perform the launch control. The vehicle comprises an activator that sets the launch control performed by the controller to an activation state, e.g. when or if an operation used to set the launch control to the activation state has been performed. The operation used to set the launch control to the activation state may comprise the first operation member being continuously operated or depressed, e.g. for a predetermined first time period.

The vehicle comprises a display unit. The display unit provides a first display indicating that an operation used to set the launch control to the activation state is being performed and/or has been continuously performed for a second time period during a period from a start of the performance of the operation used to set the launch control to the activation state until the first time period has elapsed.

In other words, the display unit is configured to provide the first display only after the operation used to set the launch control to the activation state has been continuously performed for the second time period.

The second time period is shorter than the first time period.

The display unit provides a second display indicating that the launch control is set to the activation state when or if the operation used to set the launch control to the activation state has been performed, e.g. continuously performed, for the first time period.

The display unit provides the first display indicating that an operation used to set the launch control to the activation state is being performed while the first operation member is continuously operated or depressed, and/or has been continuously operated or depressed for the second time period in or during a period from a start of the operation or depression of the first operation member until the first time period has elapsed. The display unit provides a second display indicating that the launch control is set to the activation state when or if the first operation member is continuously operated or depressed for the first time period from the start of the operation or depression of the first operation member.

In the vehicle, the launch control may be set to the activation state in a case in which the first operation member has been continuously operated or depressed for the first time period. Thus, the rider may easily set the launch control performed by the controller to the activation state in a short period of time.

In a period from the start of the operation or depression of the first operation member until the first time period has elapsed, the first display may be provided by the display unit whilst the first operation member is continuously operated or depressed and/or after the first operation member has been continuously operated or depressed for the second time period. Thus, the rider may identify that the operation used to set the launch control to the activation state is being provided by viewing the first display performed by the display unit.

Further, in a case in which the first operation member is continuously operated or depressed for the first time period from the start of the depression of the first operation member, the second display may be performed by the display unit. Thus, the rider may identify that the launch control is set to the activation state by viewing the second display performed by the display unit. Therefore, even when the rider is in an extremely stressed state, such as at a race, the operation used to set the launch control to the activation state is being accurately provided.

The first display may be different to the second display. The first display may comprise a different mode or form to that of the second display.

The display unit may include a display screen, and may perform the first display by displaying a first index or indicia in a first mode on the display screen. The display unit may be configured to perform the second display by displaying the first index or indicia in a second mode that is different from the first mode on the display screen.

In this case, the rider may easily identify that the operation used to set the launch control to the activation state is being performed by viewing the first index or indicia displayed in the first mode. Further, the rider may easily identify that the launch control is set to the activation state by viewing the first index or indicia displayed in the second mode.

The vehicle may further include an allowing/preventing part that may allow or prevent the setting of the activation state of the launch control, e.g. by the operation of the first operation member. The display unit may provide a third display, which may indicate that the setting of the activation state of the launch control is allowed, e.g. by displaying the first index or indicia in a third mode that is different from the first and second modes on the display screen when the setting of the activation state of the launch control is allowed by the allowing/preventing part and the first and second displays are not being provided.

In this case, the rider may easily identify that the setting of the activation state of the launch control by the operation of the first operation member is possible by viewing the first index or indicia displayed in the third mode.

The display unit may not display or may not have to display the first index or indicia on the display screen when the setting of the activation state of the launch control is prevented by the allowing/preventing part and the first and second displays are not being provided.

In this case, when the first index or indicia is not displayed on the display screen, the rider may easily identify that the setting of the activation state of the launch control by the operation of the first operation member is prevented or impossible.

The display unit may provide the first display by blinking the first index or indicia and may provide the second display by lighting the first index or indicia.

When the first index or indicia blinks, the first index or indicia may be easily viewed by the rider. Thus, the rider may accurately provide the operation used to set the launch control to the activation state while viewing the first index or indicia. Further, the first index or indicia may be lit, so that the rider may easily identify that the launch control is set to the activation state.

The vehicle may further include an allowing-preventing part, that may allow or prevent the setting of the activation state of the launch control, e.g. by the operation of the first operation member, wherein the display unit may provide a third display indicating that the setting of the activation state of the launch control is allowed when the setting of the activation state of the launch control is allowed by the allowing-preventing part.

In this case, the rider may identify that the setting of the activation state of the launch control is allowed by viewing the third display provided by the display unit.

The display unit may be configured to display, and/or be capable of displaying, speed of the vehicle.

In this case, the rider may view the speed of the vehicle displayed in the display unit. Further, the display unit displaying the speed of the vehicle may normally be provided at a position that is easily viewed by the rider who is riding the vehicle. The above-mentioned configuration may cause the first display to be performed by the display unit that displays the speed of the vehicle, so that the rider may easily view the first display while riding the vehicle.

The controller may perform a predetermined first process except for or that does not comprise the setting of the activation state of the launch control in a case in which the first operation member is not continuously operated or depressed from the start of the operation or depression of the first operation member until the first time period has elapsed.

The above-mentioned configuration may cause the launch control to be set to the activation state in a case in which the first operation member is continuously operated or depressed for the first time period. On the other hand, the first process may be performed in a case in which the first operation member is not continuously operated or depressed from the start of the depression of the first operation member until the first time period has elapsed. In this manner, different processes may be performed according to the time period for which the first operation member is operated or depressed. Therefore, it may not be necessary to provide an operation member for every process, so that an increase in size of the vehicle and an increase in number of components are prevented.

The vehicle may further have a second operation member, which may be configured to be operated or depressed by the rider. The first and second operation members may be arranged to be adjacent to each other. The controller may provide a predetermined second process except for or that does not comprise the setting of the activation state of the launch control in a case in which the second operation member is continuously operated or depressed for a predetermined third time period.

The above-mentioned configuration may cause the launch control to be set to the activation state when or if the first operation member is continuously operated or depressed for the first time period. The above-mentioned configuration may cause the second process to be performed in a case in which the second operation member is continuously operated or depressed for the third time period.

The first and second operation members, which may cause the relevant predetermined processes to be performed by being continuously operated or depressed for the constant time periods, may be arranged adjacent each other. Even in such a case, the first display may be provided by the display unit whilst the operation used to set the launch control to the activation state is being performed. Therefore, when the rider sets the launch control to the activation state, the rider may be prevented from operating the second operation member by mistake.

The vehicle may further include a handle, wherein the first operation member may be provided at the handle.

In this case, the first operation member may be provided at the handle, so that the rider may operate the first operation member while gripping the handle.

As indicated above, the vehicle may be a straddle-type or saddle-ride vehicle.

The display unit may be configured to stop or cancel, e.g. to automatically stop or cancel, display of the second display when a terminating condition is satisfied after the launch control has been set to the activation state, e.g. after the launch control is started. The terminating condition may be a condition responsive to which the activator sets the launch control performed by the controller to a deactivation state. The terminating condition may comprise a gear ratio of a drive system being changed or a speed of the vehicle exceeding a threshold value, for example.

In this case, the rider of the straddle-type vehicle may easily and accurately provide the operation used when the launch control is set to the activation state in a short period of time.

It will be appreciated that the first operation member being continuously operated or depressed, e.g. for a predetermined first time period, may be only one possible example of the operation used to set the launch control to the activation state.

The vehicle may be a straddle-type vehicle.

In this case, the rider of the straddle-type vehicle can easily and accurately perform the operation used when the launch control is set to the activation state in a short period of time.

According to a second aspect of the present invention is a method for setting launch control to an activation state in a vehicle, such as a straddle-type or saddle-ride vehicle, in which launch control can be performed when starting the vehicle. The vehicle may comprise a first operation member, which may be configured to be operated or depressed by a rider. The vehicle may comprise a controller that performs the launch control. The vehicle may comprise an activator that sets the launch control performed by the controller to an activation state when the first operation member has been continuously operated or depressed for a predetermined first time period. The vehicle may comprise a display unit. The vehicle may be a vehicle according to the first aspect.

The method may comprise providing a first display using the display unit. The first display may indicate that an operation used to set the launch control to the activation state is being performed. The method may comprise providing the first display while the first operation member is being continuously operated or depressed, e.g. after the first operation member has been continuously operated or depressed for a second time period during a period from a start of the depression of the first operation member until the first time period has elapsed. The second time period may be shorter than the first time period.

The method may comprise providing a second display using the display unit. The second display may indicate that the launch control is set to the activation state. The method may comprise providing the second display if the first operation member has been continuously operated or depressed for the first time period from the start of the operation or depression of the first operation member.

According to a third aspect of the present invention is a display unit for a vehicle, such as a straddle-type or saddle-ride vehicle, in which launch control can be performed when starting the vehicle.

The vehicle may comprise a first operation member, which may be configured to be operated or depressed by a rider. The vehicle may comprise a controller, which may perform the launch control. The vehicle may comprise an activator, which may set the launch control performed by the controller to an activation state when the first operation member has been continuously operated or depressed for a predetermined first time period. The vehicle may be a vehicle according to the first aspect.

The display unit may be configured to provide a first display indicating that an operation used to set the launch control to the activation state is being performed while the first operation member is being continuously operated or depressed, e.g. after the first operation member has been continuously operated or depressed for a second time period during a period from a start of the depression of the first operation member until the first time period has elapsed. The second time period may be shorter than the first time period.

The display unit may be configured to provide a second display indicating that the launch control is set to the activation state if the first operation member has been continuously operated or depressed for the first time period, e.g. from the start of the operation or depression of the first operation member.

According to a fourth aspect of the present invention is an electronic control unit for a vehicle, such as a straddle-type or saddle-ride vehicle, in which launch control can be performed when starting the vehicle.

The vehicle may comprise a first operation member, which may be configured to be operated or depressed by a rider. The vehicle may comprise a display unit. The vehicle may be a vehicle according to the first aspect.

The electronic control unit may be configured to perform the launch control. The electronic control unit may be configured to implement an activator that sets the launch control performed by the controller to an activation state when the first operation member has been continuously operated or depressed for a predetermined first time period.

The electronic control unit may be configured to control the display unit to provide a first display indicating that an operation used to set the launch control to the activation state is being performed while the first operation member is being continuously operated or depressed, e.g. after the first operation member has been continuously operated or depressed for a second time period during a period from a start of the depression of the first operation member until the first time period has elapsed. The second time period may be shorter than the first time period.

The electronic control unit may be configured to control the display unit to provide a second display indicating that the launch control is set to the activation state if the first operation member has been continuously operated or depressed for the first time period from the start of the operation or depression of the first operation member.

According to a fifth aspect of the present invention is a computer program product for programming a display unit or an electronic control unit for a vehicle, such as a straddle-type or saddle-ride vehicle, in which launch control can be performed when starting the vehicle. The vehicle may comprise a first operation member configured to be operated or depressed by a rider. The vehicle may comprise the display unit and the electronic control unit. The vehicle may be a vehicle according to the first aspect.

The electronic control unit may be configured or configurable, e.g. using the computer program product, to perform the launch control. The electronic control unit may be configured or configurable, e.g. using the computer program product, to implement an activator that sets the launch control performed by the controller to an activation state when the first operation member has been continuously operated or depressed for a predetermined first time period.

The computer program product may be arranged to configure the display unit, or configure the electronic control unit to control the display unit, to provide a first display indicating that an operation used to set the launch control to the activation state is being performed while the first operation member is being continuously operated or depressed, e.g. after the first operation member has been continuously operated or depressed for a second time period during a period from a start of the depression of the first operation member until the first time period has elapsed. The second time period may be shorter than the first time period.

The computer program product may be arranged to configure the display unit, or configure the electronic control unit to control the display unit, to provide a second display indicating that the launch control is set to the activation state if the first operation member has been continuously operated or depressed for the first time period from the start of the operation or depression of the first operation member.

The computer program product may be configured to at least partially implement or program the display unit of the third aspect or the electronic control unit of the fourth aspect. The computer program product may be provided on a carrier-medium, such as a non-transient and/or tangible carrier medium. The computer program product may be programmed or programmable into a processor and/or provided on a memory or storage, such as a RAM, ROM, on a hard drive, on a memory card, USB memory storage, a flash drive or card, and/or the like.

It will be appreciated that features analogous to those described in relation to any of the above aspects may be individually and separably or in combination applicable to any of the other aspects.

Apparatus features analogous to, or configured to implement, those described above in relation to a method and method features analogous to the use and fabrication of those described above in relation to an apparatus are also intended to fall within the scope of the present invention.

### BRIEF DESCRIPTION OF DRAWINGS

Embodiments of the present invention will now be described, by way of example only, with reference to the accompanying drawings, which are:
- **Figure 1**: a side view of one side of a motorcycle according to one embodiment of the present invention;
- **Figure 2**: an external view of a meter unit and its peripheral members as viewed from a position behind and obliquely above a head pipe of Figure 1;
- **Figure 3**: a block diagram showing part of a control system of the motorcycle of Figure 1;
- **Figure 4**: a table of levels, of power control, traction control, slide control and launch control, which can be set by a rider;
- **Figure 5**: a diagram showing one example of a control mode;
- **Figure 6**: a diagram showing one example of control level setting information;
- **Figure 7**: a diagram showing one example of an image displayed on a screen of the meter unit of Figure 2;
- **Figures 8A and 8B**: time charts showing a relationship between a series of operation steps regarding launch control and a display state of a launch icon of Figure 7;
- **Figures 9A to 9E**: diagrams showing examples of a display state of a lower display section of Figure 7 at a time of an operation of a switch unit of Figure 3;
- **Figure 10**: a processing flow of an ECU of Figure 3 regarding the launch control; and
- **Figure 11**: a processing flow of the ECU of Figure 3 regarding the launch control.

### DETAILED DESCRIPTION OF DRAWINGS

A vehicle according to one embodiment of the present invention will be described below with reference to drawings. In the following description, a motorcycle will be described as one example of the vehicle.

### Schematic Configuration of Motorcycle

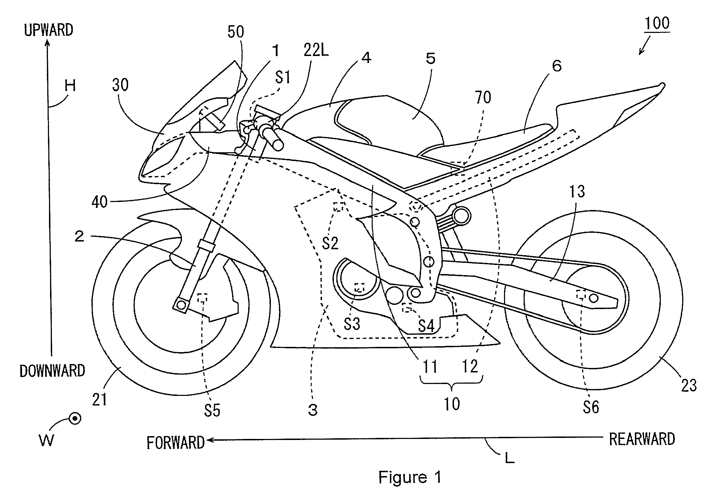

Figure 1 is a side view of one side of the motorcycle according to the one embodiment of the present invention. In Figure 1, the motorcycle 100 is shown standing up to be perpendicular to a road surface. In part of Figure 1 and the subsequent diagrams, a front-and-rear direction L, a width direction W and a top-and-bottom direction H of the motorcycle 100 are indicated by arrows.

In the following description, a direction in which an arrow is directed in the front-and-rear direction L is referred to as forward, and its opposite direction is referred to as rearward. Further, a direction in which an arrow is directed in the width direction W is referred to as leftward, and its opposite direction is referred to as rightward. Further, a direction in which an arrow is directed in the top-and-bottom direction H is referred to as upward, and its opposite direction is referred to as downward. In other words, it will be appreciated that references to forward, rearward, left or leftward, right or rightward, up or upward, down or downward are as seen from the point of view of the rider when sitting on the motorcycle.

As shown in Figure 1, the motorcycle 100 includes a head pipe 1 and a vehicle body frame 10. The vehicle body frame 10 includes a main frame 11 and a sub-frame 12. The main frame 11 extends rearward and obliquely downward from the head pipe 1. A rear end of the main frame 11 is curved downward. The sub-frame 12 extends rearward from an upper portion of a rear end of the main frame 11.

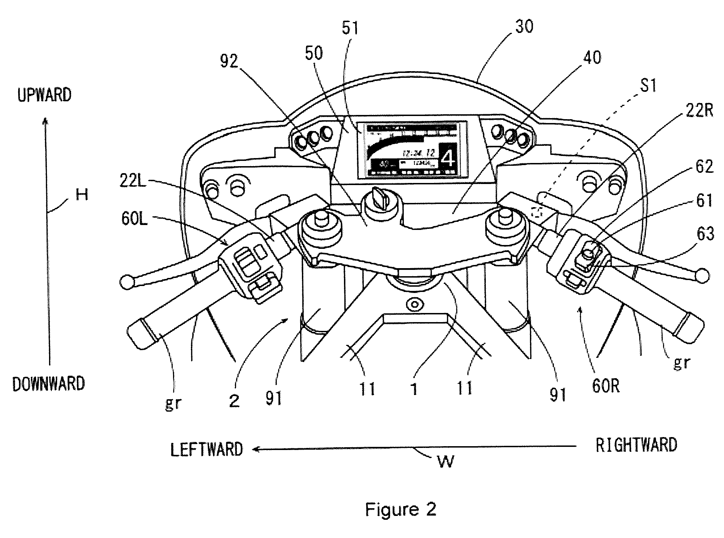

A head lamp unit 40 is provided in front of the head pipe 1. The head lamp unit 40 is supported at or by the head pipe 1. A front fork 2 is provided at the head pipe 1, to be swingable to the left and right. A front wheel 21 is rotatably supported at the lower end of the front fork 2. Left and right handles 22L, 22R (see Figure 2, described below) are provided at the upper end of the front fork 2.

A vehicle body cover 30 is provided to cover the head pipe 1 from the front and to cover part of the front fork 2 from both sides. The vehicle body cover 30 is attached to the head lamp unit 40 and the vehicle body frame 10. A meter unit 50 is provided on the head lamp unit 40 and in front of the head pipe 1. Details of the meter unit 50 and its peripheral members will be described below.

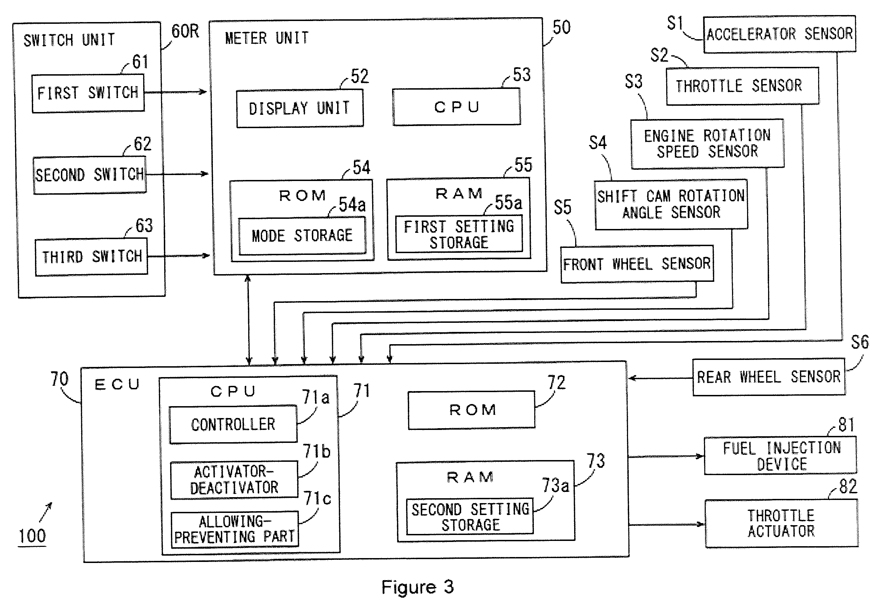

An engine unit 3 is provided at a lower portion of the main frame 11. The engine unit 3 includes an engine, a throttle body, a transmission mechanism, a fuel injection device 81 (see Figure 3, described below) and a throttle actuator 82 (see Figure 3, described below) and is supported at or by the main frame 11.

An air cleaner 4 is supported by the head pipe 1 and the main frame 11 so as to be located above or directly over the engine unit 3. A fuel tank 5 is supported by the main frame 11 rearwardly or directly behind the air cleaner 4. Further, a seat 6 is supported by the sub-frame 12 rearwardly or directly behind the fuel tank 5. An ECU (Electronic Control Unit) 70 is provided at a lower portion of the seat 6. Details of the ECU 70 will be described below. A rear arm 13 is provided to extend rearward from the lower end of the main frame 11. A rear wheel 23 is rotatably supported at the rear end of the rear arm 13. The rear wheel 23 is rotated as a drive wheel by motive power generated from the engine.

### Configuration of Meter Unit and its Peripheral Portions

Figure 2 is an external view of the meter unit 50 and its peripheral members as viewed from a position behind and obliquely above the head pipe 1 of Figure 1. As shown in Figure 2, the meter unit 50 has a screen 51 that is directed rearward and obliquely upward, provided on the head lamp unit 40 and attached to the inside of the front end of the vehicle body cover 30. On the screen 51 of the meter unit 50, a state of launch control, described below, is mainly displayed together with a speed of the motorcycle 100 (vehicle speed) and rotation speed of the engine. Details of the contents displayed on the screen 51 will be described below.

The front fork 2 provided at the head pipe 1 includes left and right fork tubes 91, an upper bracket 92 and an under bracket (not shown). The upper bracket 92 couples the upper ends of the pair of fork tubes 91, and the under bracket couples the pair of fork tubes 91 at a position further downward than the upper bracket 92. The left and right handles 22L, 22R are attached to lower portions at both ends of the upper bracket 92 in the width direction W.

A grip gr having a constant length is provided at each handle 22L, 22R. The right grip gr constitutes an accelerator grip that adjusts output of the engine unit 3 of Figure 1. Further, in each handle 22L, 22R, each switch unit 60L, 60R is provided to be adjacent to the respective grip gr.

The switch unit 60L that is provided at the left handle 22L includes a switch that changes an irradiating direction of light from the head lamp unit 40 in the top-and-bottom direction, a switch that blinks a turn indicator lamp (not shown) and the like. A switch unit 60R provided at the right handle 22R includes a first switch 61, a second switch 62 and a third switch 63. The second switch 62, the first switch 61 and the third switch 63 are arranged downward in this order.

Each of the first to third switches 61 to 63 is configured to be operated or depressed by a rider. The rider can depress each of the first to third switches 61 to 63 by a thumb of his or her right hand while holding the right grip gr with his or her right hand. Each of the first to third switches 61 to 63 is depressed, so that various settings regarding control of the engine unit 3 and the like are performed. Details of the contents of the setting by the first to third switches 61 to 63 will be described below.

### Control System of Motorcycle

Figure 3 is a block diagram showing part of the control system of the motorcycle 100 of Figure 1. As shown in Figure 3, the motorcycle 100 of Figure 1 includes the switch unit 60R, the meter unit 50, the ECU 70, the fuel injection device 81 and the throttle actuator 82 as the control system. Further, the motorcycle 100 includes an accelerator sensor S1, a throttle sensor S2, an engine rotation speed sensor S3, a shift cam rotation angle sensor S4, a front wheel sensor S5 and a rear wheel sensor S6.

The switch unit 60R includes the first to third switches 61 to 63 and is connected to the meter unit 50. Each of the first to third switches 61 to 63 is depressable, responsive to which a signal indicating that a depressing operation is being performed is supplied from each of the first to third switches 61 to 63 to the meter unit 50. The signal supplied from each of the first to third switches 61 to 63 to the meter unit 50 is also supplied to the ECU 70 through the meter unit 50.

The meter unit 50 includes a display unit 52, a CPU (Central Processing Unit) 53, a ROM (Read on Memory) 54 and a RAM (Random Access Memory) 55.

The display unit 52 includes the screen 51 of Figure 2 and is constituted by a liquid crystal display panel or an organic EL (Electroluminescence) panel, for example. The ROM 54 stores a control program of the CPU 53 and the like. Further, the ROM 54 has a mode storage 54a. Control modes, described below, are stored in the mode storage 54a. The RAM 55 stores various data and functions as a processing area of the CPU 53. Further, the RAM 55 has a first setting storage 55a. Control level setting information, described below, is stored in the first setting storage 55a. The CPU 53 performs the control program stored in the ROM 54.

The ECU 70 includes a CPU 71, a ROM 72 and a RAM 73. The ROM 72 stores a control program of the CPU 71 and the like. The RAM 73 stores various data and functions as a processing area of the CPU 71. Further, the RAM 73 has a second setting storage 73a. The control level setting information, described below, is stored in the second setting storage 73a similarly to the first setting storage 55a. The CPU 71 realizes functions of a controller 71 a, an activator-deactivator 71 b and an allowing-preventing part 71 c, described below, by performing the control program stored in the ROM 72.

The accelerator sensor S1 is provided at the right handle 22R of Figure 2 to detect an amount of operation of an accelerator grip (an accelerator opening) by the rider and to supply a signal indicating the detected accelerator opening to the ECU 70. The throttle sensor S2 is provided at the throttle body of the engine unit 3 of Figure 1 to detect a degree of opening of a throttle valve (a throttle opening) and to supply a signal indicating the detected throttle opening to the ECU 70.

The engine rotation speed sensor S3 is provided at the engine unit 3 of Figure 1 to detect the rotation speed of the engine and to supply a signal indicating the detected rotation speed to the ECU 70. The shift cam rotation angle sensor S4 is provided at the engine unit 3 of Figure 1 to detect a rotation angle of a shift cam of the transmission mechanism and to supply a signal indicating the detected rotation angle to the ECU 70. In this case, in the ECU 70, a gear position of the transmission mechanism is identified based on the signal supplied from the shift cam rotation angle sensor S4.

The front wheel sensor S5 is provided in the vicinity of the lower end of the front fork 2 of Figure 1 to detect rotation speed of the front wheel 21 of Figure 1 and to supply a signal indicating the detected rotation speed of the front wheel 21 to the ECU 70. In this case, in the ECU 70, the vehicle speed is calculated based on the rotation speed supplied from the front wheel sensor S5. The rear wheel sensor S6 is provided in the vicinity of the rear end of the rear arm 13 of Figure 1 to detect rotation speed of the rear wheel 23 of Figure 1 and to supply a signal indicating the detected rotation speed of the rear wheel 23 to the ECU 70.

The fuel injection device 81 is provided in the engine unit 3 of Figure 1, and injects fuel to an intake port of the engine such that a fuel-air mixture is led to a combustion chamber. The throttle actuator 82 is provided in the engine unit 3 of Figure 1 and adjusts the degree of opening of the throttle valve according to the accelerator opening.

In the ECU 70, the controller 71 a of the CPU 71 controls the fuel injection device 81, the throttle actuator 82 and the like based on the signals supplied from the first to third switches 61 to 63 and the signals supplied from the above-mentioned sensors S1 to S6.

In the motorcycle 100 of Figure 1, a brake control device, a gyroscope, a lateral acceleration sensor, a longitudinal acceleration sensor and a GPS (Global Positioning System) (not shown) and the like are provided in addition to the above-mentioned elements.

### Control Levels

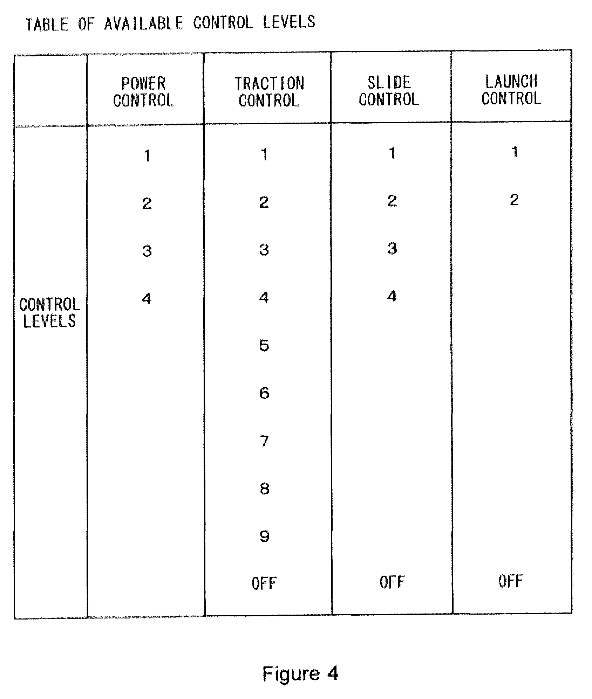

The rider can set the levels of power control, traction control, slide control and launch control, described below, by operating the switch unit 60R of Figure 3. Figure 4 is a table of the levels, of the power control, traction control, slide control and launch control, which can be set by the rider.

In the ROM 72 of Figure 3, a correspondence relationship between the accelerator opening and the throttle opening is stored. The power control is the control that reduces the throttle opening by a predetermined amount with respect to the throttle opening corresponding the accelerator opening. The controller 71 a of Figure 3 performs the power control by controlling the fuel injection device 81 and the throttle actuator 82 based on the correspondence relationship stored in the ROM 72 and the signals supplied from the accelerator sensor S1 and the throttle sensor S2, for example.

As shown in Figure 4, the rider can set the levels of "1", "2", "3" and "4" for the power control. In the present embodiment, when the accelerator opening is constant, the larger a value of the set level of the power control is, the smaller the throttle opening is (the engine output is reduced.)

The traction control is the control used when a slip of the drive wheel (a longitudinal slip) is inhibited during the traveling of the vehicle. The controller 71 a of Figure 3 calculates the degree of the slip of the drive wheel (the rear wheel 23 in the present example) (the degree of the longitudinal slip) based on the signal supplied from the front wheel sensor S5 and the rear wheel sensor S6, for example. Further, the controller 71a of Figure 3 performs the traction control by controlling the fuel injection device 81 and the throttle actuator 82 of Figure 3 based on the calculated degree of the slip.

As shown in Figure 4, the rider can set the levels of "1", "2", "3", "4", "5", "6", "7", "8" and "9" for the traction control. In the present embodiment, the larger a value of the set level of the traction control is, the larger the degree of inhibition of the slip by the traction control is (i.e. the less slip is likely to occur.)

The slide control is the control used when lateral skids of the front wheel 21 and the rear wheel 23 are inhibited during the travelling of the vehicle. The controller 71 a of Figure 3 performs the slide control by controlling the brake control device based on the signals supplied from the above-mentioned gyroscope, lateral acceleration sensor and longitudinal acceleration sensor, for example. The slide control may be performed by control of the fuel injection device 81 and the throttle actuator 82 of Figure 3 by the controller 71 a of Figure 3.

As shown in Figure 4, the rider can set the levels of "1", "2", "3" and "4" for the slide control. In the present embodiment, the larger a value of the set level of the slide control is, the larger the degree of inhibition of the lateral skid by the slide control is (i.e. the less the lateral skid is likely to occur.)

The launch control is the control that appropriately accelerates the vehicle while inhibiting the slip of the drive wheel at a time of starting of the vehicle. The controller 71 a of Figure 3 performs the launch control by controlling the fuel injection device 81 and the throttle actuator 82 of Figure 3 based on the signals supplied from the sensors S1 to S6 of Figure 3, for example. As a result of the launch control, the rider need not provide a delicate accelerator operation when the slip of the drive wheel is prevented.

As shown in Figure 4, the rider can set levels of "1" and "2" for the launch control. In the present embodiment, the larger a value of the set level of the launch control, the larger the degree of inhibition of the slip of the drive wheel by the launch control (i.e. the less the slip of the drive wheel is likely to occur.)

The rider can further select not to provide (OFF setting) each of the above-mentioned traction control, slide control and launch control. In Figure 4, the control level during the OFF setting is indicated by a character string of "OFF". In the following description, the control level during the OFF setting is referred to as "OFF".

In the motorcycle 100 according to the present embodiment, the power control is always performed. Therefore, the level of the power control is set to any one of the levels of "1", "2", "3" and "4".

### Control Modes

When the levels of the above-mentioned power control, traction control, slide control and launch control are individually set, it is necessary to repeat a setting operation at least four times, so that the setting operation becomes complicated. Therefore, regarding the levels of the power control, traction control, slide control and launch control, predetermined combinations are stored in the mode storage 54a of Figure 3 as the control modes. The combination of the control levels in each control mode is determined according to a travelling environment of the vehicle such as a road condition and weather.

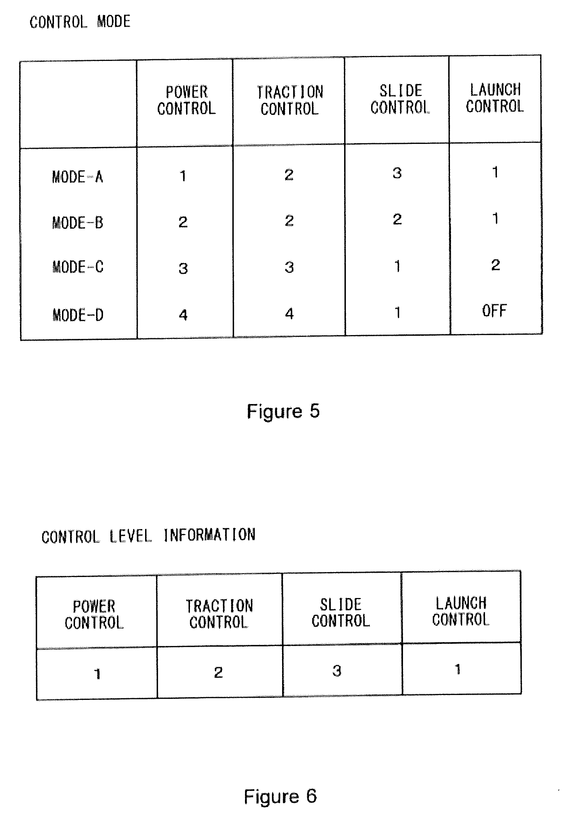

Figure 5 is a diagram showing one example of the control modes. The four control modes indicated by the character strings of "MODE-A", "MODE-B", "MODE-C" and "MODE-D" are shown in Figure 5.

In "MODE-A", the levels of the power control, traction control, slide control and launch control are "1 ", "2", "3" and "1 ", respectively. Further, in "MODE-B", the levels of the power control, traction control, slide control and launch control are "2", "2", "2" and "1", respectively.

Further, in "MODE-C", the levels of the power control, traction control, slide control and launch control are "3", "3", "1" and "2", respectively. Further, in "MODE-D", the levels of the power control, traction control, slide control and launch control are "4", "4", "1" and "OFF", respectively.

The rider can select a desired control mode of the plurality of control modes and set the selected control mode by operating the switch unit 60R of Figure 3. In this case, the levels of the power control, traction control, slide control and launch control are simultaneously set by the set control mode.

### Control Level Setting Information

When each control level is set by the operation of the switch unit 60R of Figure 3, the contents of the setting are stored in the first setting storage 55a of Figure 3 as the control level setting information.

Figure 6 is a diagram showing one example of the control level setting information. For example, when "MODE-A" of Figure 5 is set by the rider, the combination of the control levels corresponding to "MODE-A" is stored in the first setting storage 55a of Figure 3 as the control level setting information, as shown in Figure 6. The control level setting information stored in the first setting storage 55a is updated every time the setting operation of the control level is performed.

The CPU 53 of Figure 3 supplies the control level setting information stored in the first setting storage 55a to the ECU 70 of Figure 3 in a predetermined period. In the ECU 70 of Figure 3, the control level setting information supplied from the meter unit 50 is stored in the second setting storage 73a. The control level setting information stored in the second setting storage 73a of Figure 3 is updated every time the control level setting information is supplied. The controller 71a of Figure 3 performs each control corresponding to the set level based on the control level setting information stored in the second setting storage 73a.

### Example of Screen Display of Meter Unit

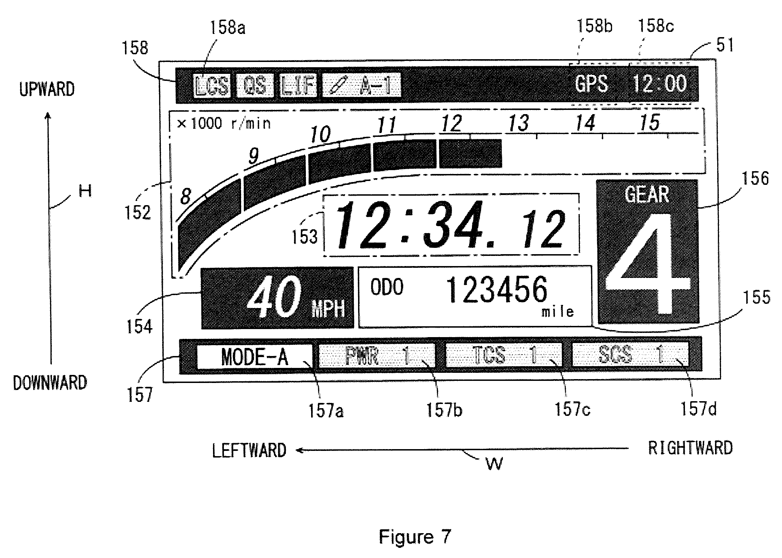

Figure 7 is a diagram showing one example of an image displayed on the screen 51 of the meter unit 50 of Figure 2. In Figure 7, portions that are displayed in black are indicated by hatching, and portions that are displayed in grey are indicated by a dotted pattern. Portions without the hatching or dotted pattern are displayed in white.

In the example of Figure 7, a rotation speed display region 152 and a lap time display region 153 are set to be arranged in a central portion of the screen 51 in the top-and-bottom direction. In the rotation speed display region 152, the rotation speed of the engine is displayed by a bar graph. The motorcycle 100 has a function of measuring a lap time based on the position information measured by the above-mentioned GPS. A result of measurement of the lap time by the lap time measurement function is displayed in the lap time display region 153.

A vehicle speed display section 154 and a traveled distance display section 155 are arranged rightward in this order below or directly under the lap time display region 153. The vehicle speed is displayed in the vehicle speed display section 154. A traveled distance is displayed in the traveled distance display section 155. The traveled distance is calculated based on the vehicle speed and the traveled time period, for example. Further, a gear position display section 156 is displayed at the right of the lap time display region 153 and traveled distance display section 155. A current gear position of the transmission mechanism is displayed in the gear position display section 156.

A strip-shaped lower display section 157 extending in the width direction W is displayed between the vehicle speed display section 154, traveled distance display section 155 and gear position display section 156, and the lower edge of the screen 51. In the lower display section 157, a control mode icon 157a, a power level icon 157b, a traction level icon 157c and a slide level icon 157d are displayed from the left to right. Details of each icon 157a to 157d displayed in the lower display section 157 will be described below.

A strip-shaped upper display section 158 extending in the width direction W is displayed between the rotation speed display region 152 and the upper edge of the screen 51. In the upper display section 158, a launch icon 158a is displayed in the vicinity of the left end, and a GPS image 158b and a time image 158c are displayed in the vicinity of the right end. Details of the launch icon 158a will be described below. The GPS image 158b is displayed when a GPS radio wave is being received. The time image 158c indicates the current time.

### Launch Control

In the present embodiment, the launch control performed by the controller 71 a of Figure 3 is set to an activation state or a deactivation state. For example, a flag for the launch control that is stored in advance in the RAM 73 of Figure 3 can be turned on, so that the launch control is set to the activation state. Further, the flag for the launch control can be turned off, so that the launch control is set to the deactivation state.

When the launch control is set to the activation state, the controller 71 a of Figure 3 performs the launch control at the time of the starting of the vehicle. On the other hand, when the launch control is set to the deactivation state, the controller 71 a of Figure 3 does not provide the launch control even at the time of the starting of the vehicle.

Here, when the level of the launch control is set to a value except for "OFF" (e.g. the level is set to "1" or "2" in the example of Figure 4), the allowing-preventing part 71 c of Figure 3 allows the setting of the activation state of the launch control. In this case, if the first switch 61 of Figure 3 is continuously operated or depressed for a predetermined first time period (2.0 seconds, for example), the activator-deactivator 71 b of Figure 3 sets the launch control performed by the controller 71 a to the activation state.

When a predetermined terminating condition is satisfied after the launch control is started, the activator-deactivator 71 b of Figure 3 sets the launch control performed by the controller 71 a to the deactivation state. The terminating condition is that the speed of the motorcycle 100 exceeds a predetermined threshold value, or that the gear position of the transmission mechanism is changed, for example.

On the other hand, when the level of the launch control is set to "OFF", the allowing-preventing part 71 c of Figure 3 prevents the setting of the activation state of the launch control. In this case, even in a case in which the first switch 61 of Figure 3 is continuously operated or depressed for the first time period, the activator-deactivator 71 b of Figure 3 does not set the launch control performed by the controller 71 a to the activation state. That is, the launch control performed by the controller 71 a is kept in the deactivation state.

During the setting of the activation state of the launch control and the setting of the deactivation state of the launch control, the controller 71a of Figure 3 supplies instruction regarding the display of the launch icon 158a of Figure 7 to the meter unit 50. In the meter unit 50, the CPU 53 responds to the instruction from the controller 71 a and controls a display state of the display unit 52.

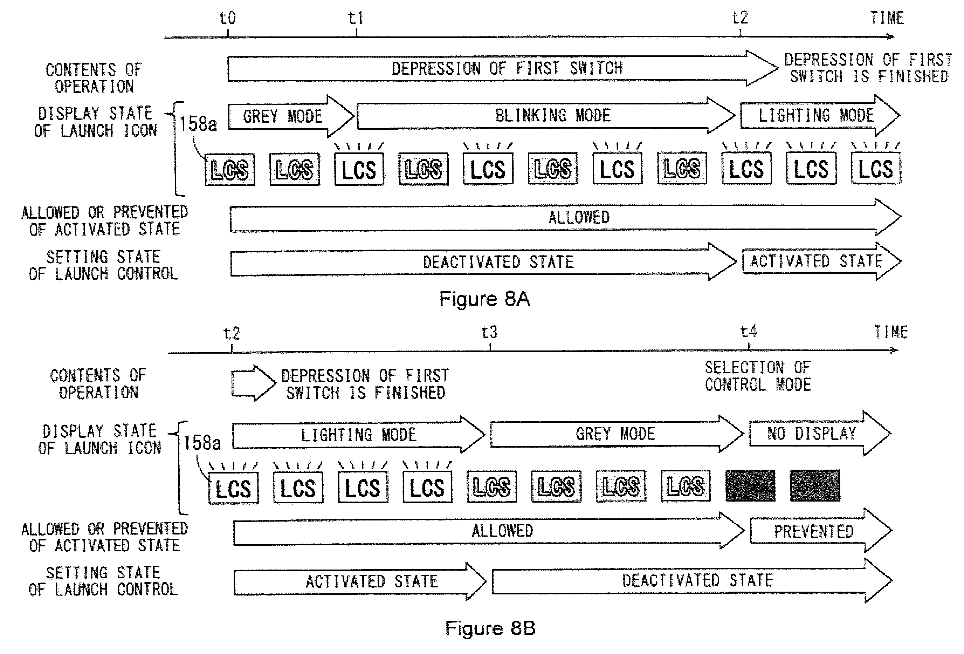

Figures 8A and 8B are time charts showing a relationship between the order of a series of operations regarding the launch control and a display state of the launch icon 158a of Figure 7. A time chart from a time point t0 to a time point t2 is shown in Figure 8A, and a time chart from the time point t2 to a time point t4 is shown in Figure 8B.

In each of Figures 8A and 8B, the contents of the operations of the switch unit 60R of Figure 3 are shown in a top column. The display states of the launch icon 158a of Figure 7 are shown in a second column with examples of the images. Whether the setting of the activation state is allowed is shown in a third column. The set states of the launch control performed by the controller 71 a of Figure 3 are shown in a fourth column.

In the examples of the images of the launch icon 158a of Figures 8A and 8B, portions displayed in black are indicated by the hatching, and portions displayed in grey are indicated by the dotted pattern, similarly to the example of Figure 7. Portions without the hatching and the dotted pattern are displayed in white.

In an initial state, the level of the launch control is set to "1" of Figure 4, and the vehicle is stopped, for example. In this case, the allowing-preventing part 71c of Figure 3 allows the setting of the activation state of the launch control. Further, in the initial state, the launch control is set to the deactivation state.

Here, the launch icon 158a of Figure 7 includes a character string "LCS" and is displayed on the screen 51 in three modes. Out of the three modes, a mode in which a thick character string is superimposed against a white background is referred to as a lighting mode. Further, a mode in which an outlined character string is superimposed against a grey background is referred to as a grey mode. Further, a mode in which the lighting mode and the grey mode are switched to each other in a predetermined period (a period of 0.5 second, for example) is referred to as a blinking mode.

When the setting of the activation state of the launch control is allowed, the launch icon 158a is displayed in the grey mode on the screen 51. Thus, the rider can identify by viewing the launch icon 158a displayed in the grey mode that the launch control can be set to the activation state.

As shown in Figures 8A and 8B, the rider continuously depresses the first switch 61 of Figure 3 for the first time period from the time point t0 in order to set the launch control performed by the controller 71 a of Figure 3 to the activation state. The first time period of the present example is the time period from the time point t0 to the time point t2.

In this case, in a period in which the first switch 61 is continuously operated or depressed for a predetermined second time period (0.5 second, for example) from a start of the depression of the first switch 61, the launch icon 158a is displayed in the grey mode. The second time period is shorter than the first time period and is the time period from the time point t0 to the time point t1.

As described above, in a case in which the first switch 61 is continuously operated or depressed for the first time period, the launch icon 158a is displayed in the blinking mode while the first switch 61 is continuously operated or depressed after the second time period has elapsed. Thus, the rider can identify by viewing the launch icon 158a displayed in the blinking mode that the operation used to set the launch control to the activation state is being performed.

Thereafter, in a case in which the first switch 61 is operated or depressed for the first time period from the time point t0 to the time point t2, the launch control is set to the activation state at the time point t2, and the launch icon 158a is displayed in the lighting mode. Thus, the rider can identify by viewing the launch icon 158a displayed in the lighting mode that the launch control is set to the activation state.

After the depression of the first switch 61 is finished at the time point t2, the vehicle is started. Thus, the controller 71a of Figure 3 performs the launch control. Thereafter, the above-mentioned terminating condition is satisfied at a time point t3, so that the launch control is set to the deactivation state. At this time, the launch icon 158a is displayed in the grey mode. Thus, the rider can identify by viewing the launch icon 158a displayed in the grey mode that the launch control is terminated.

For example, the control mode of "MODE-D" of Figure 5 is set at a time point t4 after the launch control is terminated, so that the level of the launch control is set to "OFF".

In this case, the allowing-preventing part 71c of Figure 3 prevents the setting of the activation state of the launch control. When the setting of the activation state of the launch control is prevented, the launch icon 158a is not displayed on the screen 51. Thus, the rider can identify by not viewing the launch icon 158a that the launch control cannot be set to the activation state even if the first switch 61 is operated.

### Example of Operation of Switch Unit

In the following description, an operation of continuously depressing each of the first switch 61 and the second switch 62 of Figure 3 for the first time period is referred to as continuous depression. Further, an operation of not continuously depressing each of the first switch 61, the second switch 62 and the third switch 63 of Figure 3 until the first time period has elapsed since each of the first switch 61, the second switch 62 and the third switch 63 of Figure 3 was operated or depressed is referred to as normal operation or depression.

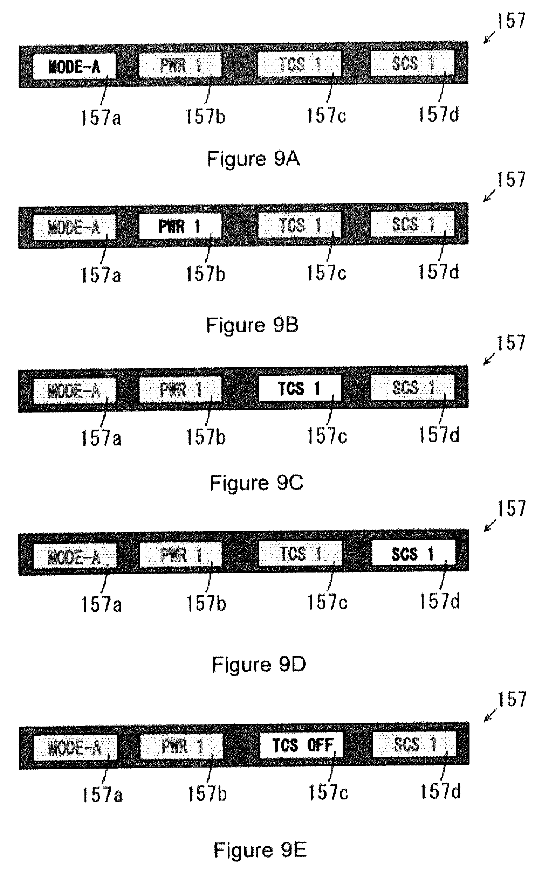

The example of the operation of the switch unit 60R of Figure 3 will be described. Figures 9A to 9E are diagrams showing one example of a display state of the lower display section 157 of Figure 7 during the operation of the switch unit 60R of Figure 3.

Here, the control mode icon 157a includes any one of the respective character strings "MODE-A", "MODE-B", "MODE-C" and "MODE-D" indicating the four control modes of Figure 5. The power level icon 157b includes any one of character strings "PWR 1", "PWR 2", "PWR 3" and "PWR 4" respectively indicating levels "1", "2", "3" and "4" of the power control of Figure 4.

Further, the traction level icon 157c includes any one of character strings "TCS 1" to "TCS 9" and "TCS OFF" respectively indicating levels "1" to "9" and "OFF" of the traction control of Figure 4. The slide level icon 157d includes any one of character strings "SCS 1", "SCS 2", "SCS 3", "SCS 4" and "SCS OFF" respectively indicating levels "1", "2", "3", "4" and "OFF" of the slide control of Figure 4.

In the lower display section 157 of Figures 9A to 9E, each of the control mode icon 157a, power level icon 157b, traction level icon 157c and slide level icon 157d is displayed in two modes. The two modes are the above-mentioned lighting mode and grey mode.

First, as shown in Figure 9A, the control mode icon 157a is displayed in the lighting mode, and the rest of the icons 157b, 157c, 157d are displayed in the grey mode. In this case, the rider can sequentially change the control mode of Figure 5 and set the control mode by performing the normal depression of the second switch 62 or the third switch 63.

When the control mode is set, the character string of the control mode icon 157a indicates the set control mode. Further, when the control mode is set, the levels of the power control, traction control, slide control and launch control are simultaneously set by the combination of the levels corresponding to the set control mode. Therefore, each character string of the power level icon 157b, traction level icon 157c and slide level icon 157d indicates the level corresponding to the set control mode.

Next, the rider performs the normal depression of the first switch 61 in the display state of Figure 9A. Thus, as shown in Figure 9B, the power level icon 157b is displayed in the lighting mode, and the rest of the icons 157a, 157c, 157d are displayed in the grey mode. In this case, the rider can sequentially change the level of the power control of Figure 4 and can set the level of the power control by performing the normal depression of the second switch 62 or the third switch 63. At this time, the character string of the power level icon 157b indicates the set level of the power control.

Next, the rider performs the normal depression of the first switch 61 in the display state of Figure 9B. Thus, as shown in Figure 9C, the traction level icon 157c is displayed in the lighting mode, and the rest of the icons 157a, 157b, 157d are displayed in the grey mode. In this case, the rider can sequentially change the level of the traction control of Figure 4 and can set the level of the traction control by performing the normal depression of the second switch 62 or the third switch 63. At this time, the character string of the traction level icon 157c indicates the set level of the traction control.

Next, the rider performs the normal depression of the first switch 61 in the display state of Figure 9C. Thus, as shown in Figure 9D, the slide level icon 157d is displayed in the lighting mode, and the rest of the icons 157a, 157b, 157c are displayed in the grey mode. In this case, the rider can sequentially change the level of the slide control of Figure 4 and can set the level of the slide control by performing the normal depression of the second switch 62 or the third switch 63. At this time, the character string of the slide level icon 157d indicates the set level of the slide control.

When the rider performs the normal depression of the first switch 61 in the display state of Figure 9D, the lower display section 157 returns to the display state of Figure 9A. Thus, the rider can sequentially change the control mode of Figure 5 again.

As described above, the rider can select any one target of the setting of the control mode, power control, traction control, slide control and launch control by preforming the normal depression of the first switch 61. Normal depression of the first switch 61 toggles through selection of parameters such as the control mode, power control, traction control and slide control and the second switch 62 and third switch 63 are operable to select a level of the selected parameter.

A process of changing the target of the setting of the control level by the normal depression of the first switch 61 is performed by the controller 71 a of Figure 3 as a first process. The process of changing the target of the setting of the control level may be performed by the CPU 53 of Figure 3 instead of the controller 71 a of Figure 3.

In the present embodiment, as shown in Figure 9C, the rider performs the continuous depression of the second switch 62 with the traction control being selected as the target of the setting of the control level, whereby the level of the traction control is set to "OFF" by one operation. Thus, the rider can deactivate the traction control in a short period of time. In this case, the character string of the traction level icon 157c is "TCS OFF" as shown in Figure 9E.

A process of deactivating the traction control by the continuous depression of the second switch 62 is performed by the controller 71 a of Figure 3 as a second process. The process of deactivating the traction control may be performed by the CPU 53 of Figure 3 instead of the controller 71 a of Figure 3.

The process of deactivating the above-mentioned traction control can be effectively utilized when a road surface condition is drastically changed during the travelling of the vehicle such as a case in which the vehicle travels on a paved road and then on a gravel road.

### Processing Flow of Engine Controller

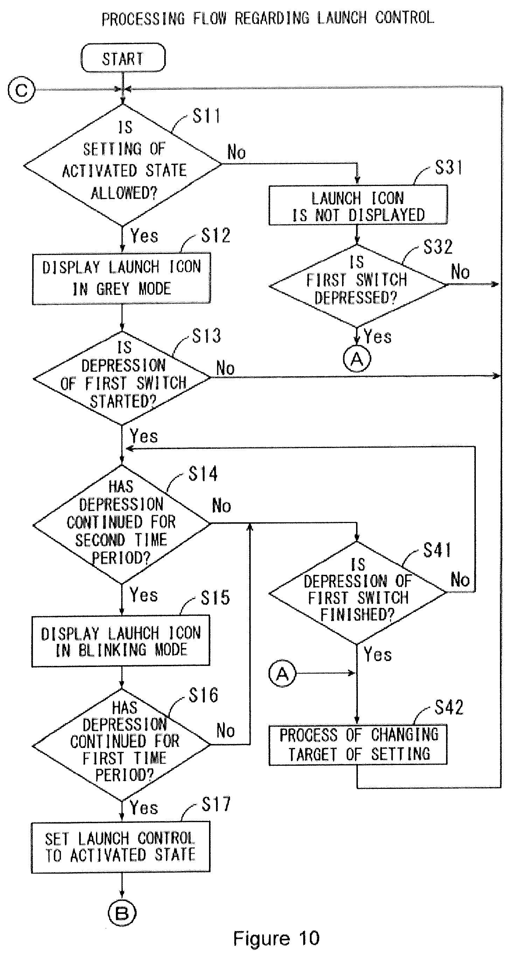

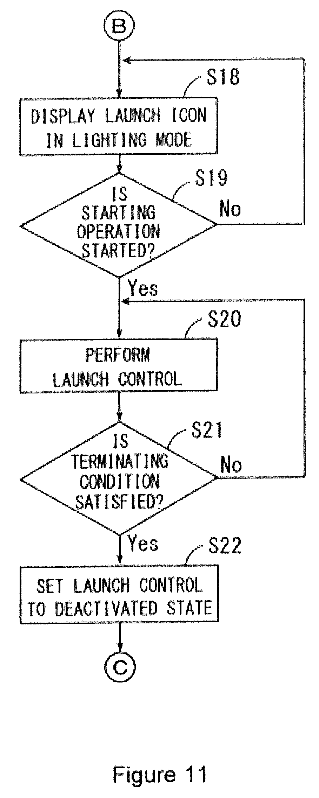

Figures 10 and 11 are processing flows of the ECU 70 of Figure 3 regarding the launch control. The present processing flow is started when the main switch (not shown) is turned on. In the initial state, the launch control is set to the deactivation state.

First, the controller 71a of the CPU 71 determines based on the control level setting information stored in the second setting storage 73a of Figure 3 whether the setting of the activation state of the launch control is allowed (step S11).

When the level of the launch control is "OFF", the controller 71 a determines that the setting of the activation state of the launch control is prevented by the allowing-preventing part 71 c. In this case, the controller 71 a supplies an instruction for not displaying the launch icon 158a to the meter unit 50 of Figure 3 (step S31). Thus, the launch icon 158a is not displayed on the screen 51 of Figure 7. After the process of step S31, the controller 71 a determines based on the signal supplied from the first switch 61 of Figure 3 whether the first switch 61 is depressed (step S32). When the first switch 61 is not depressed, the controller 71 a returns to perform the process of step S11. On the other hand, when the first switch 61 is depressed, the controller 71 a performs the process of step S42, described below.

In step S11, when the level of the launch control is "1" or "2", the controller 71 a determines that the setting of the activation state of the launch control is allowed by the allowing-preventing part 71 c. In this case, the controller 71 a supplies an instruction of displaying the launch icon 158a in the grey mode to the meter unit 50 of Figure 3 (step S12). Thus, the launch icon 158a is displayed in the grey mode on the screen 51 of Figure 7.

Next, the controller 71 a determines based on a signal supplied from the first switch 61 of Figure 3 whether the depression of the first switch 61 has started (step S13). When the depression of the first switch 61 has not started, the controller 71 a returns to perform the process of step S11. On the other hand, when the depression of the first switch 61 has started, the controller 71 a determines whether the depression of the first switch 61 has continued for the second time period since the start of the depression of the first switch 61 (step S14).

In a case in which the depression of the first switch 61 has continued for the second time period, the controller 71 a supplies an instruction for displaying the launch icon 158a in the blinking mode to the meter unit 50 of Figure 3 (step S15). Thus, the launch icon 158a is displayed in the blinking mode on the screen 51 of Figure 7.

Next, the controller 71 a determines whether the depression of the first switch 61 has continued for the first time period since the start of the depression of the first switch 61 (step S16). In a case in which the depression of the first switch 61 has continued for the first time period, the activator-deactivator 71 b of the CPU 71 sets the launch control to the activation state (step S17).

Further, in a case in which the depression of the first switch 61 has continued for the first time period, the controller 71 a supplies an instruction for displaying the launch icon 158a in the lighting mode to the meter unit 50 of Figure 3 (step S18). Thus, the launch icon 158a is displayed in the lighting mode on the screen 51 of Figure 7.

Next, the controller 71 a determines based on the signal supplied from each sensor S1 to S6 of Figure 3 whether a starting operation of the vehicle is started (step S19). When the starting operation of the vehicle is not started, the controller 71a performs the process of step S18.

On the other hand, when the starting operation of the vehicle is started, the controller 71 a performs the launch control (step S20). Thereafter, the controller 71 a determines based on the signal supplied from each sensor S1 to S6 of Figure 3 whether the above-mentioned terminating condition is satisfied (step S21). When the terminating condition is not satisfied, the controller 71 a returns to perform the process of step S20. On the other hand, when the terminating condition is satisfied, the activator-deactivator 71 b of the CPU 71 sets the launch control to the deactivation state (step S22). Thereafter, the controller 71 a returns to perform the process of step S11.

In a case in which the depression of the first switch 61 has not continued for the second time period in above-mentioned step S14, or in a case in which the depression of the first switch 61 has not continued for the first time period in above-mentioned step S16, the controller 71a determines whether the depression of the first switch 61 is finished (step S41).

When the depression of the first switch 61 is not finished, the controller 71 a returns to perform the process of step S14. On the other hand, when the depression of the first switch 61 is finished, the controller 71a returns to perform the process of step S11 after the process of changing the target of the setting of the control level is performed (step S42).

### Effects

In a case in which the first switch 61 is continuously depressed for the first time period, the launch control is set to the activation state. Thus, the rider can easily set the launch control performed by the controller 71 a to the activation state in a short period of time.

In a period from the start of the depression of the first switch 61 until the first time period has elapsed, the launch icon 158a is displayed in the blinking mode on the screen 51 while the first switch 61 is continuously depressed after the first switch 61 has been continuously depressed for the second time period. In particular, when the launch icon 158a is displayed in the blinking mode, the launch icon 158a is easily viewed by the rider.

Thus, the rider can easily identify by viewing the launch icon 158a displayed in the blinking mode that the operation used to set the launch control to the activation state is being performed.

Further, when the first switch 61 is continuously depressed for the first time period from the start of the depression of the first switch 61, the launch icon 158a is displayed in the lighting mode on the screen 51. Thus, the rider can easily identify by viewing the launch icon 158a displayed in the lighting mode that the launch control is set to the activation state.

As a result, the rider can accurately perform the operation used when the launch control is set to the activation state even when the rider is in an extremely stressed state due to a race or the like.

The launch icon 158a is displayed on the screen 51 of the meter unit 50. The meter unit 50 is provided at a position that is easily viewed by the rider who is riding the vehicle in order to display information such as the vehicle speed during the travelling of the vehicle. Thus, the rider can easily view the launch icon 158a while riding the vehicle.

The rider who is riding the vehicle may view the rotation speed of the engine, the speed of the vehicle and the like with relatively high frequency. In this case, the rider moves a line of sight between a position in front of the vehicle and a center portion of the screen 51. In the example of Figure 7, the launch icon 158a is displayed at a position between the rotation speed display region 152 and vehicle speed display section 154, and the upper edge of the screen 51. Therefore, the launch icon 158a is easily viewed when the rider moves the line of sight between the position in front of the vehicle and a substantially center portion of the screen 51.

Further, because the launch icon 158a is displayed in the vicinity of the upper edge of the screen 51, the rider can switch to viewing the launch icon 158a from viewing the front of the vehicle without largely moving the line of sight.

As described above, when the first switch 61 is continuously depressed, the launch control is set to the activation state. On the other hand, when the normal depression of the first switch 61 is performed, the process of changing the target of the setting of the control level is performed. In this manner, different processes are performed depending on the time period for which the depression of the first switch 61 is continued. Therefore, it is not necessary to provide an operation unit for every process, so that an increase in size of the vehicle and an increase in number of components are prevented.

When the first switch 61 is continuously depressed, the launch control is set to the activation state, and when the second switch 62 is continuously depressed, the process of deactivating the traction control is performed. In this manner, the first switch 61 and the second switch 62, which cause the predetermined processes to be performed by being continuously depressed for the constant time periods, are arranged to be adjacent to each other. Even in such a case, the launch icon 158a is displayed in the blinking mode on the screen 51 at the time of the operation used when the launch control is set to the activation state. Therefore, when the launch control is being set to the activation state, the rider is prevented from operating the second switch 62 by mistake.

### Other Embodiments

While the display unit 52 of the meter unit 50 is controlled by the CPU 53 that has received the instruction from the controller 71 a of the ECU 70 in the above-mentioned embodiment, the display unit 52 of the meter unit 50 may be controlled by the controller 71 a of the ECU 70 instead of the CPU 53.

While each of the controller 71 a, the activator-deactivator 71 b and the allowing-preventing part 71 c is realized by hardware and software in the above-mentioned embodiment, the invention is not limited to the example of Figure 3. The controller 71 a, the activator-deactivator 71 b and the allowing-preventing part 71 c may be realized by hardware such as electronic circuits and the like, and part of these constituent elements may be realized by hardware such as a CPU and a memory, and software such as a computer program.

While the process of changing the target of setting of the control level is performed as the first process by the normal depression of the first switch 61 in the above-mentioned embodiment, the process performed by the normal depression of the first switch 61 is not limited to the above-mentioned example. The process performed by the normal depression of the first switch 61 only has to be the process except for, or not comprising, the setting of the activation state of the launch control, and may be a process of switching a state of light-emission of a head lamp or a process of stopping the engine, for example.

While the process of deactivating the traction control is performed as the second process by the continuous depression of the second switch 62 in the above-mentioned embodiment, the process performed by the continuous depression of the second switch 62 is not limited to the above-mentioned example. The process performed by the continuous depression of the second switch 62 only has to be the process except for, or not comprising, the setting of the activation state of the launch control, and may be the process of switching the state of light-emission of the head lamp or the process of stopping the engine, for example.

While one launch icon 158a is displayed on the screen 51 of the meter unit 50 in the above-mentioned embodiment, a plurality of launch icons 158a may be displayed on the screen 51 of the meter unit 50. For example, first, second and third launch icons, respectively corresponding to a case in which the operation used to set the launch control to the activation state is being performed, a case in which the launch control is set to the activation state, and/or a case in which the setting of the activation state of the launch control is allowed, may be individually displayed on the screen 51.

In this case, the first, second and third launch icons are displayed to include shapes, character strings and marks that are different from one another, so that the rider can easily identify the information regarding the launch control.

In the above-mentioned embodiment, the launch icon 158a is displayed on the screen 51 of the meter unit 50. However, when another display device is separately provided from the meter unit 50, the launch icon 158a may be displayed in the other display device.

While the launch icon 158a including the character string is displayed in the blinking mode, the lighting mode and the grey mode in order to let the rider identify the information regarding the launch control in the above-mentioned embodiment, the display used when letting the user identify the information regarding the launch control is not limited to the above-mentioned example.

For example, the launch icon 158a may be displayed in three types of colors that are different from one another respectively corresponding to the case in which the operation for setting the launch control to the activation state is being performed, the case in which the launch control is set to the activation state and the case in which the setting of the activation state of the launch control is allowed.

Alternatively, a display device including three LEDs (light-emitting diodes) that have different emission colors from one another is separately prepared from the meter unit 50. Further, these three LEDs respectively correspond to the case in which the operation used to set the launch control to the activation state is being performed, the case in which the launch control is set to the activation state, and the case in which the setting of the activation state of the launch control is allowed. In this case, the display device is provided at a position that is easily viewed by the rider, and the state of light emission of each of the three LEDs is switched to another state, whereby the rider can easily identify the information regarding the launch control.

While the above-mentioned embodiment is an example in which the present invention is applied to the motorcycle, the invention is not limited to this. The present invention may be applied to another vehicle such as a four-wheeled automobile, a motor tricycle, an ATV (All Terrain Vehicle) or the like.

In particular, the present invention can be effectively utilized for a vehicle having a drive wheel rotated by an engine.

It will be appreciated that the term straddle-type vehicle or motor vehicle used herein, and as used in the art, is meant to include the following terms also used in the art:
saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

### Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the motorcycle 100 is an example of a vehicle and a straddle-type or saddle-ride vehicle, the first switch 61 of the switch unit 60R is an example of a first operation member, the controller 71 a is an example of a controller, the first time period is an example of a first time period, the activator-deactivator 71 b is an example of an activator and the second time period is an example of a second time period and a third time period.

Further, the display of the launch icon 158a in the blinking mode is an example of a first display, the display of the launch icon 158a in the lighting mode is an example of a second display and the display unit 52 of the meter unit 50 is an example of a display unit.

Further, the screen 51 is an example of a display screen, the launch icon 158a is an example of a first index or indicia, the blinking mode is an example of a first mode, the lighting mode is an example of a second mode, the allowing-preventing part 71 c is an example of an allowing-preventing part, the grey mode is an example of a third mode, the display of the launch icon 158a in the grey mode is an example of a third display.

Further, the process of changing the target of the setting of the control level by the normal depression of the first switch 61 is an example of a first process, the second switch 62 of the switch unit 60R is an example of a second operation member, the process of deactivating the traction control by the continuous depression of the second switch 62 is an example of a second process and the handles 22L, 22R are examples of a handle.

As each of constituent elements recited in the claims, various other elements having configurations or functions described in the claims can be also used.

## Claims

1. A vehicle (100), such as a straddle-type or saddle-ride vehicle, in which launch control can be performed when starting the vehicle, the vehicle comprising:
a first operation member (61) configured to be operated or depressed by a rider;
a controller (71 a) that performs the launch control;
an activator (71 b) that sets the launch control performed by the controller (71 a) to an activation state when the first operation member (61) has been continuously operated or depressed for a predetermined first time period; and
a display unit (52) that provides a first display indicating that an operation used to set the launch control to the activation state is being performed while the first operation member (61) is being continuously operated or depressed after the first operation member (61) has been continuously operated or depressed for a second time period during a period from a start of the depression of the first operation member (61) until the first time period has elapsed, the second time period being shorter than the first time period, and the display unit (52) provides a second display indicating that the launch control is set to the activation state if the first operation member (61) has been continuously operated or depressed for the first time period from the start of the operation or depression of the first operation member (61).

2. The vehicle (100) according to claim 1, wherein
the display unit (52) includes a display screen (51) to perform the first display by displaying a first index or indicia (158a) in a first mode on the display screen (51) and to perform the second display by displaying the first index or indicia (158a) in a second mode that is different from the first mode on the display screen (51).

3. The vehicle (100) according to claim 2, further comprising an allowing-preventing part (71c) that allows or prevents the setting of the activation state of the launch control by the operation of the first operation member (61), wherein
the display unit (52) performs a third display indicating that the setting of the activation state of the launch control is allowed by displaying the first index or indicia (158a) in a third mode that is different from the first and second modes on the display screen (51) when the setting of the activation state of the launch control is allowed by the allowing-preventing part (71c) and the first and second displays are not being provided.

4. The vehicle (100) according to claim 3, wherein
the display unit (52) does not display the first index or indicia (158a) on the display screen (51) when the setting of the activation state of the launch control is prevented by the allowing-preventing part (71c) and the first and second displays are not being provided.

5. The vehicle (100) according to any one of claims 2 to 4, wherein
the display unit (52) provides the first display by blinking the first index or indicia (158a) and provides the second display by lighting the first index or indicia (158a).

6. The vehicle (100) according to claim 1 or 2, further comprising an allowing-preventing part (71c) that allows or prevents the setting of the activation state of the launch control by the operation of the first operation member (61), wherein
the display unit (52) performs a third display indicating that the setting of the activation state of the launch control is allowed when the setting of the activation state of the launch control is allowed by the allowing-preventing part (71c).

7. The vehicle (100) according to any one of claims 1 to 6, wherein
the display unit (52) is configured to be capable of displaying speed of the vehicle.

8. The vehicle (100) according to any one of claims 1 to 7, wherein
the controller (71 a) performs a predetermined first process except for, or not comprising, the setting of the activation state of the launch control in a case in which the first operation member (61) is not continuously operated or depressed from the start of the depression of the first operation member until the first time period has elapsed.

9. The vehicle (100) according to any one of claims 1 to 8, further having a second operation member (62) that is configured to be operated or depressed by the rider, wherein
the first and second operation members (61,62) are arranged to be adjacent to each other, and
the controller (71 a) performs a predetermined second process except for, or not comprising, the setting of the activation state of the launch control in a case in which the second operation member (62) is continuously operated or depressed for a predetermined third time period.

10. The vehicle (100) according to any one of claims 1 to 9, further comprising a handle (22L,22R), wherein
the first operation member (61) is provided at the handle (22L,22R).

11. The vehicle (100) according to any of the preceding claim, wherein the display unit (52) is configured to stop or cancel display of the second display when a terminating condition is satisfied after the launch control has been set to the activation state.

12. The vehicle (100) according to any one of claims 1 to 11, wherein
the vehicle (100) is a straddle-type vehicle.

## Patentansprüche

1. Fahrzeug (100), wie z. B. ein Spreitzsitz-Fahrzeug oder ein Fahrzeug vom Aufsitz-Typ, bei dem beim Anlassen des Fahrzeugs ein Rennstart-Anfahrvorgang ausgeführt werden kann, wobei das Fahrzeug Folgendes umfasst:
ein erstes Bedienelement (61), das dazu konfiguriert ist, von einem Fahrer betätigt oder gedrückt zu werden;
eine Steuereinheit (71a), die den Rennstart-Anfahrvorgang ausführt;
eine Aktivierungsvorrichtung (71b), die den von der Steuereinheit (71a) ausgeführten Rennstart-Anfahrvorgang in einen Aktivierungszustand bringt, wenn das erste Bedienelement (61) über einen festgelegten ersten Zeitraum hinweg kontinuierlich betätigt oder gedrückt wurde; und
eine Anzeige-Einheit (52), die eine erste Anzeige bereitstellt, die anzeigt, dass eine Betätigung ausgeführt wird, mit der der Rennstart-Anfahrvorgang in den Aktivierungszustand gebracht wird, während das erste Bedienelement (61) kontinuierlich betätigt oder gedrückt wird, nachdem das erste Bedienelement (61) über einen zweiten Zeitraum kontinuierlich betätigt oder gedrückt wurde, und zwar während eines Zeitraums ab dem Beginn des Drückens des ersten Bedienelements (61) bis zu einem Zeitpunkt, wenn der erste Zeitraum abgelaufen ist, wobei der zweite Zeitraum kürzer ist als der erste Zeitraum, und wobei die Anzeige-Einheit (52) eine zweite Anzeige bereitstellt, die anzeigt, dass der Rennstart-Anfahrvorgang in den Aktivierungszustand gebracht wurde, wenn das erste Bedienelement (61) über den ersten Zeitraum kontinuierlich betätigt oder gedrückt wurde, und zwar ab dem Beginn der Betätigung oder des Drückens des ersten Bedienelements (61).

2. Fahrzeug (100) nach Anspruch 1, wobei
die Anzeige-Einheit (52) einen Anzeigebildschirm (51) zum Ausführen der ersten Anzeige durch das Anzeigen einer ersten Kennzahl oder Kennzahlen (158a) in einem ersten Modus auf dem Anzeigebildschirm (51) und zum Ausführen der zweiten Anzeige durch das Anzeigen der ersten Kennzahl oder Kennzahlen (158a) in einem zweiten Modus, der sich vom ersten Modus auf dem Anzeigebildschirm (51) unterscheidet, enthält.

3. Fahrzeug (100) nach Anspruch 2, ferner umfassend ein Teil zum Zulassen/Verhindern (71c), das durch die Betätigung des ersten Bedienelements (61) zulässt oder verhindert, dass der Rennstart-Anfahrvorgang in den Aktivierungszustand gebracht wird, wobei
die Anzeige-Einheit (52) eine dritte Anzeige ausführt, die anzeigt, dass zugelassen wird, dass der Rennstart-Anfahrvorgang in den Aktivierungszustand gebracht wird, indem die erste Kennzahl oder Kennzahlen (158a) in einem dritten Modus angezeigt werden, der sich von dem ersten und zweiten Modus am Anzeigebildschirm (51) unterscheidet, wenn durch das Teil zum Zulassen/Verhindern (71c) zugelassen wird, dass der Rennstart-Anfahrvorgang in den Aktivierungszustand gebracht wird und die erste und zweite Anzeige nicht bereitgestellt werden.

4. Fahrzeug (100) nach Anspruch 3, wobei
die Anzeige-Einheit (52) die erste Kennzahl oder Kennzahlen (158a) nicht am Anzeigebildschirm (51) anzeigt, wenn durch das Teil zum Zulassen/Verhindern (71c) verhindert wird, dass der Rennstart-Anfahrvorgang in den Aktivierungszustand gebracht wird und die erste und zweite Anzeige nicht bereitgestellt werden.

5. Fahrzeug (100) nach einem der Ansprüche 2 bis 4, wobei
die Anzeige-Einheit (52) die erste Anzeige durch das Aufblinken der ersten Kennzahl oder Kennzahlen (158a) und die zweite Anzeige durch das Aufleuchten der ersten Kennzahl oder Kennzahlen (158a) bereitstellt.

6. Fahrzeug (100) nach Anspruch 1 oder 2, ferner umfassend ein Teil zum Zulassen/Verhindern (71c), das durch die Betätigung des ersten Bedienelements (61) zulässt oder verhindert, dass der Rennstart-Anfahrvorgang in den Aktivierungszustand gebracht wird, wobei
die Anzeige-Einheit (52) eine dritte Anzeige ausführt, die anzeigt, dass zugelassen wird, dass der Rennstart-Anfahrvorgang in den Aktivierungszustand gebracht wird, wenn durch das Teil zum Zulassen/Verhindern (71c) zugelassen wird, dass der Rennstart-Anfahrvorgang in den Aktivierungszustand gebracht wird.

7. Fahrzeug (100) nach einem der Ansprüche 1 bis 6, wobei
die Anzeige-Einheit (52) dazu konfiguriert ist, die Geschwindigkeit des Fahrzeugs anzeigen zu können.

8. Fahrzeug (100) nach einem der Ansprüche 1 bis 7, wobei
die Steuereinheit (71a) ein vorgegebenes erstes Verfahren ausführt, außer oder nicht umfassend, dass der Rennstart-Anfahrvorgang in den Aktivierungszustand gebracht wird, und zwar in einem Fall, in dem das erste Bedienelement (61) ab dem Beginn des Drückens des ersten Bedienelements bis zum Ablauf des ersten Zeitraums nicht kontinuierlich betätigt oder gedrückt wird.

9. Fahrzeug (100) nach einem der Ansprüche 1 bis 8, ferner aufweisend ein zweites Bedienelement (62), das dazu konfiguriert ist, vom Fahrer betätigt oder gedrückt zu werden, wobei
das erste und zweite Bedienelement (61, 62) so angeordnet sind, dass sie nebeneinander liegen, und
die Steuereinheit (71a) ein vorgegebenes zweites Verfahren ausführt, außer oder nicht umfassend, dass der Rennstart-Anfahrvorgang in den Aktivierungszustand gebracht wird, und zwar in einem Fall, in dem das zweite Bedienelement (62) über einen vorgegebenen dritten Zeitraum hinweg kontinuierlich betätigt oder gedrückt wird.

10. Fahrzeug (100) nach einem der Ansprüche 1 bis 9, ferner umfassend einen Griff (22L, 22R), wobei
das erste Bedienelement (61) am Griff (22L, 22R) bereitgestellt ist.

11. Fahrzeug (100) nach einem der vorstehenden Ansprüche, wobei die Anzeige-Einheit (52) dazu konfiguriert ist, das Anzeigen der zweiten Anzeige anzuhalten oder aufzuheben, wenn eine Beendigungsbedingung erfüllt ist, nachdem der Rennstart-Anfahrvorgang in den Aktivierungszustand gebracht wurde.

12. Fahrzeug (100) nach einem der Ansprüche 1 bis 11, wobei das Fahrzeug (100) ein Spreitzsitz-Fahrzeug ist.

## Revendications

1. Véhicule (100), tel qu'un véhicule de type à selle ou à enfourcher, sur lequel une commande de lancement peut être mise en oeuvre lorsqu'on démarre le véhicule, le véhicule comprenant :
un premier élément d'actionnement (61) configuré pour être actionné ou enfoncé par un pilote ;
un dispositif de commande (71a) qui met en oeuvre la commande de lancement ;
un activateur (71b) qui place la commande de lancement mise en oeuvre par le dispositif de commande (71a) dans un état d'activation lorsque le premier élément d'actionnement (61) a été actionné ou enfoncé de manière continue pendant une première durée prédéterminée ; et
une unité d'affichage (52) qui fournit un premier affichage indiquant qu'un actionnement utilisé pour placer la commande de lancement dans l'état d'activation est en train d'être mis en oeuvre pendant que le premier élément d'actionnement (61) est en train d'être actionné ou enfoncé de manière continue après que le premier élément d'actionnement (61) a été actionné ou enfoncé de manière continue pendant une deuxième durée sur une période allant d'un début de l'enfoncement du premier élément d'actionnement (61) jusqu'à ce que la première durée soit écoulée, la deuxième durée étant plus courte que la première durée, et l'unité d'affichage (52) fournit un deuxième affichage indiquant que la commande de lancement est placée dans l'état d'activation si le premier élément d'actionnement (61) a été actionné ou enfoncé de manière continue pendant la première durée à partir du début de l'actionnement ou de l'enfoncement du premier élément d'actionnement (61).

2. Véhicule (100) selon la revendication 1, dans lequel
l'unité d'affichage (52) comprend un écran d'affichage (51) afin de mettre en oeuvre le premier affichage en affichant d'un premier chiffre ou indice (158a) selon un premier mode sur l'écran d'affichage (51) et afin de mettre en oeuvre le deuxième affichage en affichant le premier chiffre ou indice (158a) selon un deuxième mode qui est différent du premier mode sur l'écran d'affichage (51).

3. Véhicule (100) selon la revendication 2, comprenant en outre une partie autorisation-interdiction (71c) qui autorise ou interdit la mise en place de l'état d'activation de la commande de lancement grâce à l'actionnement du premier élément d'actionnement (61), dans lequel
l'unité d'affichage (52) met en oeuvre un troisième affichage indiquant que la mise en place de l'état d'activation de la commande de lancement est autorisée en affichant le premier chiffre ou indice (158a) selon un troisième mode qui est différent des premier et deuxième modes sur l'écran d'affichage (51) lorsque la mise en place de l'état d'activation de la commande de lancement est autorisée par la partie autorisation-interdiction (71c) et les premier et deuxième affichages ne sont pas fournis.

4. Véhicule (100) selon la revendication 3, dans lequel
l'unité d'affichage (52) n'affiche pas le premier chiffre ou indice (158a) sur l'écran d'affichage (51) lorsque la mise en place de l'état d'activation de la commande de lancement est interdite par la partie autorisation-interdiction (71c) et les premier et deuxième affichages ne sont pas fournis.

5. Véhicule (100) selon l'une quelconque des revendications 2 à 4, dans lequel
l'unité d'affichage (52) fournit le premier affichage en faisant clignoter le premier chiffre ou indice (158a) et fournit le deuxième affichage en éclairant le premier chiffre ou indice (158a).

6. Véhicule (100) selon la revendication 1 ou 2, comprenant en outre une partie autorisation-interdiction (71c) qui autorise ou interdit la mise en place de l'état d'activation de la commande de lancement grâce à l'actionnement du premier élément d'actionnement (61), dans lequel
l'unité d'affichage (52) met en oeuvre un troisième affichage indiquant que la mise en place de l'état d'activation de la commande de lancement est autorisée lorsque la mise en place de l'état d'activation de la commande de lancement est autorisée par la partie autorisation-interdiction (71c).

7. Véhicule (100) selon l'une quelconque des revendications 1 à 6, dans lequel
l'unité d'affichage (52) est configurée pour être capable d'afficher une vitesse du véhicule.

8. Véhicule (100) selon l'une quelconque des revendications 1 à 7, dans lequel
le dispositif de commande (71a) met en oeuvre un premier processus prédéterminé, à l'exception de, ou ne comprenant pas, la mise en place de l'état d'activation de la commande de lancement dans le cas où le premier élément d'actionnement (61) n'est pas actionné ou enfoncé de manière continue à partir du début de l'enfoncement du premier élément d'actionnement jusqu'à ce que la première durée soit écoulée.

9. Véhicule (100) selon l'une quelconque des revendications 1 à 8, présentant en outre un deuxième élément d'actionnement (62) qui est configuré pour être actionné ou enfoncé par le pilote, dans lequel
les premier et deuxième éléments d'actionnement (61, 62) sont agencés pour être adjacents l'un à l'autre, et
le dispositif de commande (71a) met en oeuvre un deuxième processus prédéterminé, à l'exception de, ou ne comprenant pas, la mise en place de l'état d'activation de la commande de lancement dans le cas où le deuxième élément d'actionnement (62) est actionné ou enfoncé de manière continue pendant une troisième durée prédéterminée.

10. Véhicule (100) selon l'une quelconque des revendications 1 à 9, comprenant en outre une poignée (22L, 22R), dans lequel
le premier élément d'actionnement (61) est fourni au niveau de la poignée (22L, 22R).

11. Véhicule (100) selon l'une quelconque des revendications précédentes, dans lequel l'unité d'affichage (52) est configurée pour arrêter ou annuler un affichage du deuxième affichage lorsqu'une condition d'achèvement est satisfaite après que la commande de lancement a été placée dans l'état d'activation.

12. Véhicule (100) selon l'une quelconque des revendications 1 à 11, dans lequel le véhicule (100) est un véhicule de type à enfourcher.
